# EUROPEAN PATENT SPECIFICATION

(11) **EP 3 587 631 B1**
(45) Date of publication and mention of the grant of the patent: **03.01.2024**
(21) Application number: 19175839.0
(22) Date of filing: 22.05.2019
(51) Int. Cl.: D01G 23/04, D01G 31/00

(54) **FILLING LEVEL MEASUREMENT OF A FIBER FLOCK STORE**
FÜLLSTANDSMESSUNG EINES FASERFLOCKENLAGERS
MESURE DU NIVEAU DE REMPLISSAGE D'UN MAGASIN DE FLOCONS DE FIBRES

(30) Priority: 07.06.2018 CH 7352018
(43) Date of publication of application: 01.01.2020
(73) Proprietor: Maschinenfabrik Rieter AG, 8406 Winterthur (CH)
(72) Inventor: WOLFER, Tobias, 8008 Zürich (CH); LÜTHARD, Reto, 8406 Winterthur (CH)

(56) References cited:
- EP-A2- 1 106 546
- DE-U1-202014 010 744
- US-A- 4 723 344
- US-A- 4 823 440
- US-A1- 2004 255 429
- US-A1- 2015 308 884

## Description

The invention relates to a machine for a spinning preparation for processing fiber flocks, and a method for measuring a filling level. The machine has a fiber flock inlet, a store, a fiber flock outlet, and a machine frame, the machine frame being mounted on at least four support points on a foundation.

Fiber processing machines such as cleaners, intermediate stores (so-called condensers), mixers, or carding machines are used in a spinning preparation for cleaning, mixing, and separating the fiber material into individual fibers and parallelizing them.

In a spinning preparation, the fibers to be prepared for the spinning go through multiple processing steps. For example, in a first step the fibers in the form of fiber flocks are separated from fiber bales. So-called bale openers are usually used for this purpose. These fiber flocks are taken out of the bale opener via a pneumatic flock conveyor and brought to a subsequent cleaning machine. A condenser may be provided as an intermediate store to equalize the flock flow upstream from the cleaner. In this case the pneumatic flock conveyor transports the fiber flocks in a first conveying section from the bale opener to the condenser. In the condenser the fiber flocks are separated from the transport air and supplied to a store. The transport air is discharged as exhaust air via an exhaust air system. From the store, the fiber flocks are supplied to the cleaner with the aid of a fan in a second conveying section. From the cleaner, for example in a further conveying section, the cleaned fiber flocks are pneumatically supplied to a mixer with the aid of a further fan. In the mixer, the fiber flocks are separated from the transport air and stored in various mixing chambers (stores). The stripped transport air is discharged from the mixer. The mixed fiber flocks are transported from the mixer in a further conveying section to an intermediate store with the aid of a fan. The intermediate store is used as an equalizing tank upstream from a further conveying section that supplies the fiber flocks to one or more carding machines. The carding machines, which separate the fiber flocks into individual fibers and form them into a sliver, represent the conclusion of the spinning preparation.

Various approaches are known from the prior art for filling level measurement in the various types of stores for the spinning preparation machines. According to DE 1 971 420, the filling level in a store is detected by means of a photoelectric barrier. However, this has the disadvantage that it can only be determined whether the filling level is higher or lower than the position of the photoelectric barrier. Moreover, CH 673 660 A5, for example, proposes the provision of an optical device comprising a light emitter and a light receiver. Continuous measurement of the filling level is thus possible. As a remedy, DE 10 2013 113 194 A1 proposes to provide within the filling chute (store) a measuring device that detects the change in density of the fiber material as a function of the level of the fiber material. In DE 201 02 245 U1 it is proposed to determine the filling level of filling chutes by means of pressure sensors. For this purpose, CH 662 456 A5 discloses an electronic pressure switch for use in flock feed devices. The drawback of the known approaches according to the prior art is the dependency on specific properties of the fiber flocks, and a high level of soiling of the sensors due to the necessary installation in the flock stream. In addition, pressure measurements, for example, are affected by the surroundings, and are subject to severe fluctuations due to the low pressures that prevail in the conveying and storage systems.

Further US2004/255429A1 proposes a fiber dispensing apparatus, a hopper stores up the fibers. A conveyor means provided at a bottom portion of the hopper moves the fibers from the hopper to a chute through an open portion located below one end of the conveyor means, the chute leads to a weighing hopper which is mounted on one or more load cells, such as four strain gauge load cells. The load cells measures an amount of fibers present in the weighing hopper and when a desired amount of fiber is present, the slide gate coupled to a bottom portion of the weight hopper will open and the fibers will be dumped into the next blower hopper and then be dispensed. In DE202014010744U1 it is proposed to provide a device for mixing fiber flocks in spinning preparation, in which the fiber flocks to be mixed can be conveyed into a weighing container which is mounted on three suspension points, each suspension point having a weighing sensor and a damper, therefore vibrations of the weighing container during filling can be reduced quickly and have no or only a very slight influence on the measurement result, so that the weighing container can be filled in a very short time and has high accuracy.

A disadvantage of the known systems is that a special weighing container has to be used that is independent of the store or hopper of the machine. The weighing process is a discontinuing process because the weighing hopper has to be emptied before it may be filled again. The known systems are not usable for a continuing filling and emptying of a store at the same time and therefore the substitution of a filling level measurement of the store.

Additionally, EP1106546A2 is disclosing a system for bulk delivery of ground or granular products to small-scale consumers by means of pneumatic transport. The cylindrical container at the small-scale consumer is assembled in modules and supported on bearing frame and supports, a weighing member is arranged between the bearing frame and the base on which the bearing frame has been positioned. Wherein the weighing member is positioned in the centre below the container for measuring the weight of the amount of flour present in the container. However, it is complicated to calculate the weight of the container from the data of one load cell only and a one-sided filing level measurement may take place due to the design and operation of the filling or emptying of the container, a continuous, accurate and interference-free determination cannot be guaranteed.

Accordingly, the object of the invention is to provide a device and a method for measuring a filling level in a store of a machine in the spinning preparation, which allows continuous, interference-free determination of the filling level without being influenced by the design and operation of the filling or emptying of the store, or by the product and its specific properties.

The object is achieved by the features of the independent claims.

To achieve the object, a novel method according to independent claim 9 and a corresponding machine according to independent claim 1 are proposed.

According to the invention, during filling or emptying of the store of the machine, a resulting change in weight is proportional to a load on the machine frame and on the individual support points of the machine.

Various designs of so-called force transducers may be used in load cells. For example, the use of force transducers is known in which the force acts on an elastic spring body and deforms it. The deformation of the spring body is converted to the change in a voltage via strain gauges, whose electrical resistance changes with the strain. The voltage, and thus the change in strain, is recorded via a measuring amplifier. This value may be converted to a measured force value due to the elastic properties of the spring body. Bending bars, ring torsion springs, or other designs are used as a spring body. Piezoceramic elements are used in another design of load cells. The targeted deformation of a piezoelectric material results in the formation of microscopic dipoles within the unit cells of the piezo crystal. Summing over the associated electrical field in all unit cells of the crystal results in a macroscopically measurable voltage that can be converted to a measured force value. Load cells are known from the prior art, and are currently widely used in force and weight measurement.

The known disadvantages of the filling level measurement in the past are eliminated by the use of at least two load cells. The at least two load cells are not situated in the product stream, thus allowing soiling by the product to be excluded. The filling level measurement by use of at least two load cells is also independent of the product properties, and the material allocation in the conveying stream likewise has no effect on the filling level measurement. In contrast to a filling level measurement via a pressure sensor inside the store, according to the invention the particular operating pressure that acts on the store does not play a role. The prevailing operating pressure may thus be adapted to the height of the filling level without having to make a corresponding correction of the filling level measurement itself. In addition, operation-related pressure fluctuations in the pneumatic flock conveying system do not affect the filling level measurement.

The at least two load cells are advantageously situated between two support points. As a result of the arrangement of the load cells between the support points, the load cells are placed under load due to the bending of the machine frame between the support points. However, the primary load on the machine is absorbed in the support points without load cells. In this way it may also be ensured that no transverse forces act on the load cells. In this case, transverse forces that arise are absorbed by the support points without load cells. Arranging the load cells in a line transverse to the travel axis ensures that a one-sided filling level measurement does not take place; instead, the weight of the fiber flocks as a whole in the store is detected. This type of arrangement is suited in particular for machines having a large store, for example mixers, which have a filling capacity of several hundred kilograms. This results in measurable bending of the machine frame between two support points when the machine frame has a suitable design.

For smaller machines such as intermediate stores or condensers, no measurable bending of the machine frame between the support points is to be expected on account of the smaller filling volume of 50 kg or less. Therefore, as an alternative to the above approach, the at least two load cells are situated each in one of the support points, a connecting line of the two support points being situated transverse to the travel axis.

In another alternative, a load cell is situated in all at least four support points of the machine.

Although this design is complicated, it has proven suitable in machines having small stores.

In addition, it is advantageous when the support points that are not provided with load cells have an articulated design. An articulated design of the support points ensures that even small changes in weight due to the store filling level may be recognized by the load cells during the measurement. This design is advantageous in particular when there is a small distance between the support points. A small distance between the support points results in a rigid structure of the machine frame; with a nonarticulated design of the support points, their rigidity would result in an excessively high level of load transfer with increasing filling of the store.

The load cells are advantageously connected to a shared evaluation device. The instantaneous filling level is directly output by the evaluation device. The central controller of the machine may also be used as an evaluation device. Corresponding modules that are connected to the load cells are inserted into the central controller; a connection may also be established wirelessly.

The machine is preferably decoupled from components or piping, connected to the machine, by compensators. The situation may thus be avoided that load changes in the adjoining components or piping are transferred to the filling level measurement, resulting in distortion of the results.

Vibration dampers are advantageously provided in the support points. Vibration that results from operation of the machine is thus compensated for in the support points, and is not transferred to the overall machine frame and thus, to the filling level measurement.

In addition, according to the invention, a method according to independent claim 9 is also proposed, wherein a change in a weight load on the load cells during filling or emptying of the store is measured using at least two load cells between a machine frame and a foundation. It is advantageous when, after a prior calibration with the store empty and/or full, the filling level of the store is calculated from the change in the weight load on the load cells.

The invention is explained in greater detail below with reference to exemplary embodiments and by use of drawings.
- Figure 1: shows a schematic illustration of a spinning preparation;
- Figure 2: shows a schematic illustration of a view of a first embodiment, using a mixer as an example, which does not form part of the present invention;

- Figure 3: shows a schematic illustration of a top view of the embodiment according to Figure 3;
- Figure 4: shows a schematic illustration of a view of an embodiment according to the present invention, using a mixer as an example;
- Figure 5: shows a schematic illustration of a top view of the embodiment according to Figure 4;
- Figure 6: shows a schematic illustration of a view of a further embodiment according to the present invention, using a condenser as an example; and
- Figure 7: shows a schematic illustration of a top view of the embodiment according to Figure 6.

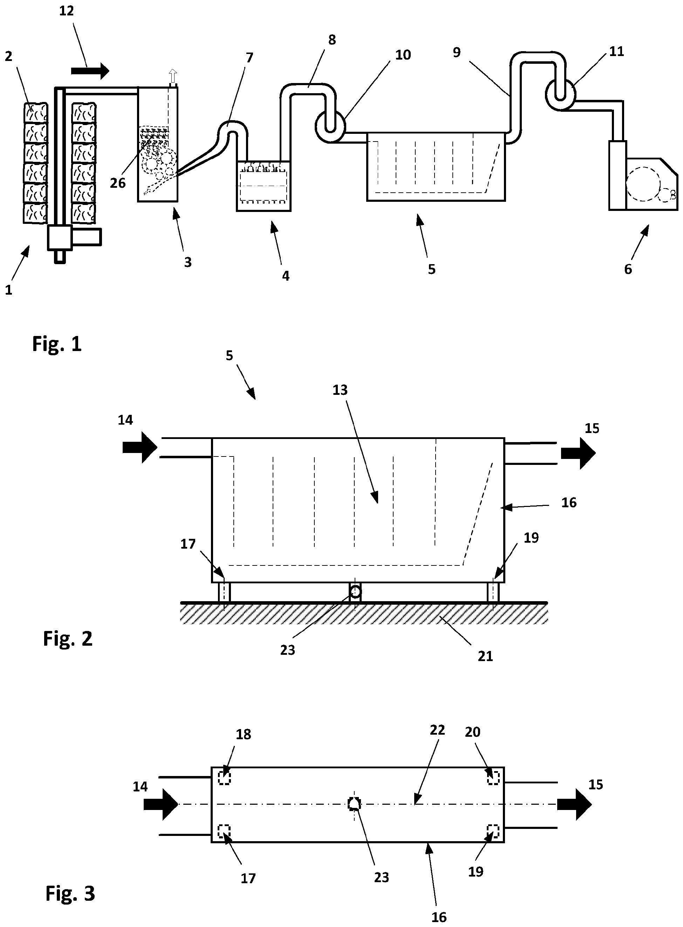

Figure 1 shows a schematic illustration of a spinning preparation. Fiber flocks 26 are separated from fiber bales 2 by a bale opener 1 and relayed in the conveying direction 12 to a condenser 3. The fiber flocks 26 are separated from the transport air in the condenser 3 and temporarily stored. The fiber flocks 26 are subsequently conveyed out of the condenser 3 via a transport line 7, and to a mixer 5 via a cleaner 4 and a further transport line 8. The conveying of the fiber flocks takes place pneumatically with the aid of a fan 10. In the mixer, the fiber flocks are introduced into various chambers, and as a mixture are supplied to a corresponding fan 11 of one or more carding machines 6 via a further transport line 9. By means of the carding machines, the fiber flocks are ultimately separated into individual fibers, cleaned, parallelized, and laid down in the form of a sliver, or in the form of a fiber fleece are provided for further processing. The illustration of the spinning preparation according to Figure 1 is simplified in order to show one possible sequence of machines, wherein individual machines have a store. However, spinning preparations may have a much more complicated design, and may contain multiple machines, for example further openers or fine cleaners as well as other machines or devices for separating foreign matter.

Figure 2 shows a schematic illustration of a view, and Figure 3 shows a top view, of an embodiment which does not form part of the present invention, using a mixer 5 as an example. The mixer 5 has a store 13 that is situated between a fiber flock inlet 14 and a fiber flock outlet 15. In addition, the mixer 5 has a machine frame 16 that is mounted in four support points 17 through 20 on a foundation 21. The fiber flock inlet 14 and the fiber flock outlet 15 in their connection define a travel axis 22. The support points 17 through 20 are situated in pairs on both sides of the travel axis 22, at the ends of the mixer 5. A load cell 23 is situated between the support points 17 through 20 in the travel axis 22. The load cell 23 is installed between the foundation 21 and the machine frame 16. The installation is provided in such a way that in the empty state of the store 13 of the mixer 5, the load cell 23 is already under a certain load. If the store 13 of the mixer 5 is now filled, the machine frame 16 is slightly bent between the support points 17 and 19 or 18 and 20, as the result of which the load on the load cell 23 increases. This load difference is proportional to the increase in the filling of the store 13 with fiber flocks, on the basis of which the filling level of the mixer 5 may be determined.

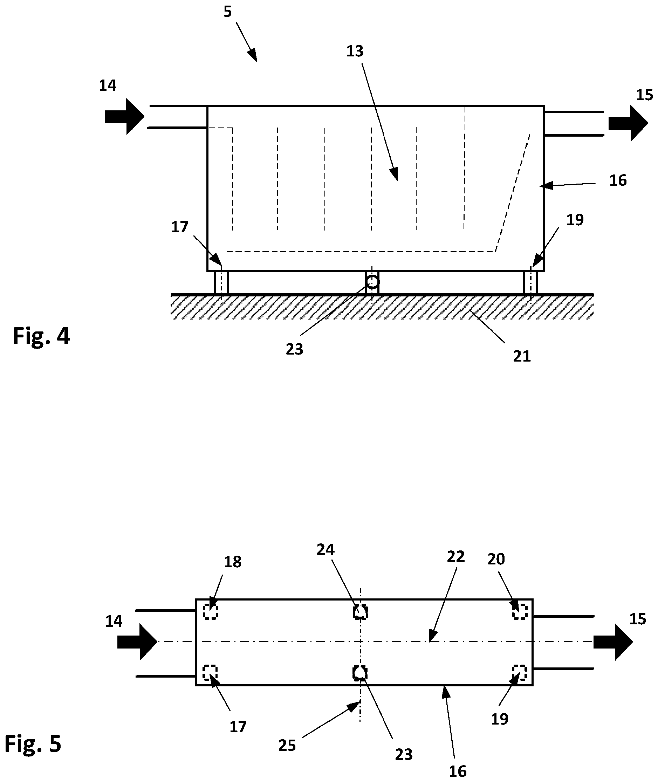

Figure 4 shows a schematic illustration of a view, and Figure 5 shows a top view, of an embodiment according to the present invention, using a mixer 5 as an example. The mixer 5 has a store 13 situated between a fiber flock inlet 14 and a fiber flock outlet 15. In addition, the mixer 5 has a machine frame 16 that is mounted in four support points 17 through 20 on a foundation 21. The fiber flock inlet 14 and the fiber flock outlet 15 in their connection define a travel axis 22. The support points 17 through 20 are situated in pairs on both sides of the travel axis 22, at the ends of the mixer 5. A load cell 23 and 24 are respectively situated on each side of the travel axis 22, between two support points 17 and 19, and 18 and 20, respectively, in such a way that a connecting line 25 through the two load cells 23 and 24 is transverse to the travel axis 22. The load cell 23, 24 is installed between the foundation 21 and the machine frame 16. The installation is provided in such a way that in the empty state of the store 13 of the mixer 5, the load cell 23, 24 is already under a certain load. If the store 13 of the mixer 5 is now filled, the machine frame 16 is slightly bent between the support points 17 and 19 or 18 and 20, as the result of which the load on the load cells 23, 24 increases. This load difference is proportional to the increase in the filling of the store 13 with fiber flocks, on the basis of which the filling level of the mixer 5 may be determined.

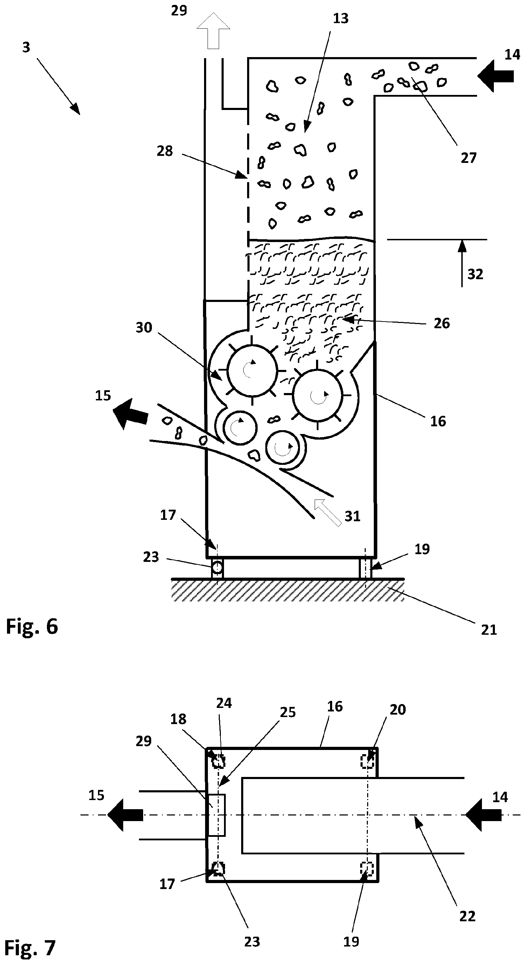

Figure 6 shows a schematic illustration of a view, and Figure 7 shows a top view, of a further embodiment according to the invention using a condenser 3 as an example. The condenser 3 is made up essentially of a machine frame 16 and a store 13 held in the machine frame 16. The fiber flocks 26 in a fiber flock-conveying air mixture 27 are introduced into the store 13 via a fiber flock inlet 14. The store 13 has an air-permeable partition 28 by means of which the conveying air is separated from the fiber flocks 26. As a result, the conveying air is discharged from the condenser 3 as exhaust air 29. As the filling level 32 rises, the air-permeable wall 28 becomes increasingly covered, resulting in a greater resistance for the conveying air 29, and thus, a pressure rise in the store 13. This circumstance has been utilized in the past to determine the filling level 32 by means of a pressure measurement.

A discharge element 30 is situated below the store 13. The discharge element 30 is made up of multiple pairs of rollers and a conveying air supply line. The supplied conveying air 31 accepts the fiber flocks 26 removed from the store 13 by the discharge element 30, and transports them through the fiber flock outlet 15 to a subsequent machine (not shown). The condenser 3 and its machine frame 16 are supported in four support points 17 through 20 on a foundation 21. The support points 17 through 20 are situated in pairs on both sides of a travel axis 22, which is formed by the connection of the fiber flock inlet 14 to the fiber flock outlet 15. A load cell 23, 24 is situated in each case in two of the four support points 17 through 20, as the result of which the machine frame is supported in two support points 17 and 18 on the foundation 21 via the load cells 23 and 24. A connecting line 25 of the two load cells 23 and 24 is situated transverse to the travel axis 22. When the height of the filling level 32 increases, the weight of the overall condenser 3 also increases. This change in weight may be directly measured by the load cells 23, 24. The instantaneous filling level 32 may thus be determined at any time based on the weight measurement.

The present invention is not limited to the exemplary embodiments illustrated and described. Within the scope of the patent claims, modifications are possible.

### List of reference numerals

- 1: bale opener
- 2: fiber bales
- 3: condenser
- 4: cleaner
- 5: mixer
- 6: carding machine
- 7, 8, 9: conveying line
- 10,11: fan
- 12: conveying direction
- 13: store
- 14: fiber flock inlet
- 15: fiber flock outlet
- 16: machine frame
- 17-20: support point
- 21: foundation
- 22: travel axis
- 23, 24: load cell
- 25: connecting line
- 26: fiber flocks
- 27: mixture of fiber flocks and conveying air
- 28: air-permeable partition
- 29: exhaust air
- 30: discharge element
- 31: conveying air
- 32: filling level

## Claims

1. A machine (3, 5) for a spinning preparation for processing fiber flocks (26), having a fiber flock inlet (14), a store (13), a fiber flock outlet (15), and a machine frame (16), wherein the machine frame (16) is mounted on at least four support points (17, 18, 19, 20) on a foundation (21), and a travel axis (22) is defined by a connecting line from the fiber flock inlet (14) to the fiber flock outlet (15), whereby during filling or emptying of the store (13) of the machine (3,5) a resulting change in weight is proportional to a load on the machine frame (16) and on the individual support points (17, 18, 19, 20) of the machine (3,5), **characterized in that** at least two load cells (23, 24) for measuring a filling level (32) of the store (13) are provided between the machine frame (16) and the foundation (21), a connecting line (25) of the two load cells (23, 24) being situated transverse to the travel axis (22).

2. The machine (3, 5) according to Claim 1, **characterized in that** the at least two load cells (23 24) are situated between two support points (17, 18, 19, 20) in each case.

3. The machine (3, 5) according to Claim 1, **characterized in that** the at least two load cells (23, 24) are situated each in one of the support points (17, 18, 19, 20).

4. The machine (3, 5) according to Claim 1, **characterized in that** a load cell (23, 24) is situated in all support points (17, 18, 19, 20) of the machine (3, 5).

5. The machine (3, 5) according to one of Claims 1 to 3, **characterized in that** the machine (3, 5) has four support points (17, 18, 19, 20), and the support points (17, 18, 19, 20) that are not provided with load cells (23, 24) have an articulated design.

6. The machine (3, 5) according to one of the preceding claims, **characterized in that** the load cells (23, 24) are connected to a shared evaluation device.

7. The machine (3, 5) according to one of the preceding claims, **characterized in that** the machine (3, 5) is decoupled from components or piping, connected to the machine (3, 5), by compensators.

8. The machine (3, 5) according to one of the preceding claims, **characterized in that** vibration dampers are provided in the support points (17, 18, 19, 20).

9. A method for measuring a filling level (32) of a store (13) of a machine (3, 5) in a spinning preparation having a fiber flock inlet (14), a store (13), a fiber flock outlet (15), and a machine frame (16), wherein the machine frame (16) is mounted on at least four support points (17, 18, 19, 20) on a foundation (21), and a travel axis (22) is defined by a connecting line from the fiber flock inlet (14) to the fiber flock outlet (15), whereby during filling or emptying of the store (13) of the machine (3, 5) a resulting change in weight is proportional to a load on the machine frame (16) and on the individual support points (17, 18, 19, 20) of the machine (3, 5), **characterized in that** at least two load cells (23, 24) are provided between the machine frame (16) and the foundation (21) and a change in a weight load on the load cells (23, 24) during filling or emptying of the store (13) is measured and a connecting line (25) of the two load cells (23, 24) is situated transverse to the travel axis (22).

10. The method according to Claim 9, **characterized in that** after a prior calibration with the store (13) empty and/or full, the filling level (32) of the store (13) is calculated from the change in the weight load on the at least two load cells (23, 24).

## Patentansprüche

1. Maschine (3, 5) für eine Spinnvorbereitung zum Verarbeiten von Faserflocken (26), die einen Faserflockeneinlass (14), einen Speicher (13), einen Faserflockenauslass (15) und einen Maschinenrahmen (16) aufweist, wobei der Maschinenrahmen (16) an mindestens vier Stützpunkten (17, 18, 19, 20) auf einem Fundament (21) montiert ist und eine Bewegungsachse (22) durch eine Verbindungslinie von dem Faserflockeneinlass (14) zu dem Faserflockenauslass (15) definiert ist, wodurch während eines Füllens oder Entleerens des Speichers (13) der Maschine (3,5) eine resultierende Gewichtsänderung proportional zu einer Last an dem Maschinenrahmen (16) und an den einzelnen Stützpunkten (17, 18, 19, 20) der Maschine (3,5) ist, **dadurch gekennzeichnet, dass** mindestens zwei Lastzellen (23, 24) zum Messen eines Füllstands (32) des Speichers (13) zwischen dem Maschinenrahmen (16) und dem Fundament (21) bereitgestellt sind, wobei eine Verbindungslinie (25) der zwei Lastzellen (23, 24) quer zu der Bewegungsachse (22) gelegen ist.

2. Maschine (3, 5) nach Anspruch 1, **dadurch gekennzeichnet dass** die mindestens zwei Lastzellen (23, 24) in jedem Fall zwischen zwei Stützpunkten (17, 18, 19, 20) gelegen sind.

3. Maschine (3, 5) nach Anspruch 1, **dadurch gekennzeichnet, dass** die mindestens zwei Lastzellen (23, 24) je in einem der Stützpunkte (17, 18, 19, 20) gelegen sind.

4. Maschine (3, 5) nach Anspruch 1, **dadurch gekennzeichnet, dass** eine Lastzelle (23, 24) in allen Stützpunkten (17, 18, 19, 20) der Maschine (3, 5) gelegen ist.

5. Maschine (3, 5) nach einem der Ansprüche 1 bis 3, **dadurch gekennzeichnet, dass** die Maschine (3, 5) vier Stützpunkte (17, 18, 19, 20) aufweist und die Stützpunkte (17, 18, 19, 20), die nicht mit Lastzellen (23, 24) versehen sind, eine gelenkige Gestaltung aufweisen.

6. Maschine (3, 5) nach einem der vorstehenden Ansprüche, **dadurch gekennzeichnet, dass** die Lastzellen (23, 24) mit einer gemeinsam genutzten Auswertevorrichtung verbunden sind.

7. Maschine (3, 5) nach einem der vorstehenden Ansprüche, **dadurch gekennzeichnet, dass** die Maschine (3, 5) von Komponenten oder Rohrleitungen, die mit der Maschine (3, 5), durch Kompensatoren, verbunden sind, entkoppelt ist.

8. Maschine (3, 5) nach einem der vorstehenden Ansprüche, **dadurch gekennzeichnet, dass** Schwingungsdämpfer in den Stützpunkten (17, 18, 19, 20) bereitgestellt sind.

9. Verfahren zum Messen eines Füllstands (32) eines Speichers (13) einer Maschine (3, 5) in einer Spinnvorbereitung, die einen Faserflockeneinlass (14), einen Speicher (13), einen Faserflockenauslass (15) und einen Maschinenrahmen (16) aufweist, wobei der Maschinenrahmen (16) an mindestens vier Stützpunkten (17, 18, 19, 20) auf einem Fundament (21) montiert ist und eine Bewegungsachse (22) durch eine Verbindungslinie von dem Faserflockeneinlass (14) zu dem Faserflockenauslass (15) definiert ist, wobei während des Füllens oder Entleerens des Speichers (13) der Maschine (3, 5) eine resultierende Gewichtsänderung proportional zu einer Last an dem Maschinenrahmen (16) und an den einzelnen Stützpunkten (17, 18, 19, 20) der Maschine (3, 5) ist, **dadurch gekennzeichnet, dass** mindestens zwei Lastzellen (23, 24) zwischen dem Maschinenrahmen (16) und dem Fundament (21) bereitgestellt sind und eine Änderung einer Gewichtslast der Lastzellen (23, 24) während dem Füllen oder Entleeren des Speichers (13) gemessen wird und eine Verbindungslinie (25) der zwei Lastzellen (23, 24) quer zu der Bewegungsachse (22) gelegen ist.

10. Verfahren nach Anspruch 9, **dadurch gekennzeichnet, dass,** nach einer vorherigen Kalibrierung mit dem Speicher (13) leer und/oder voll, der Füllstand (32) des Speichers (13) von der Änderung der Gewichtslast an den mindestens zwei Lastzellen (23, 24) berechnet wird.

## Revendications

1. Machine (3, 5) pour une préparation de filage pour traiter des flocs de fibres (26), ayant une entrée de flocons de fibre (14), une mémoire (13), une sortie de flocons de fibre (15) et un châssis de machine (16), dans laquelle le châssis de machine (16) est monté sur au moins quatre points de support (17, 18, 19, 20) sur une fondation (21), et un axe de déplacement (22) est défini par une ligne de raccordement depuis l'entrée de verrou de fibre (14) vers la sortie de flocons de fibre (15), selon laquelle, pendant le remplissage ou le vidage de la mémoire (13) de la machine (3,5), un changement résultant de poids est proportionnel à une charge sur le châssis de machine (16) et sur les points de support individuels (17, 18, 19, 20) de la machine (3,5), **caractérisée en ce qu'**au moins deux cellules de charge (23, 24) pour mesurer un niveau de remplissage (32) du magasin (13) sont prévues entre le châssis de machine (16) et la fondation (21), une ligne de raccordement (25) des deux cellules de charge (23, 24) étant située transversalement à l'axe de déplacement (22).

2. Machine (3, 5) selon la revendication 1, **caractérisée en ce que** les au moins deux cellules de charge (23, 24) sont situés entre deux points de support (17, 18, 19, 20) dans chaque cas.

3. Machine (3, 5) selon la revendication 1, **caractérisée en ce que** les au moins deux cellules de charge (23, 24) sont situées chacune dans l'un des points de support (17, 18, 19, 20).

4. Machine (3, 5) selon la revendication 1, **caractérisée en ce qu'**une cellule de charge (23, 24) est située dans tous les points de support (17, 18, 19, 20) de la machine (3, 5).

5. Machine (3, 5) selon l'une des revendications 1 à 3, **caractérisé en ce que** la machine (3, 5) a quatre points de support (17, 18, 19, 20), et les points de support (17, 18, 19, 20) qui ne sont pas pourvus de cellules de charge (23, 24) ont une conception articulée.

6. Machine (3, 5) selon l'une des revendications précédentes,
**caractérisée en ce que** les cellules de charge (23, 24) sont reliées à un dispositif d'évaluation partagée.

7. Machine (3, 5) selon l'une des revendications précédentes,
**caractérisée en ce que** la machine (3, 5) est découplée des composants ou des tuyaux, reliée à la machine (3, 5), par des compensateurs.

8. Machine (3, 5) selon l'une des revendications précédentes,
**caractérisée en ce que** des amortisseurs de vibrations sont prévus dans les points de support (17, 18, 19, 20).

9. Procédé de mesure d'un niveau de remplissage (32) d'un magasin (13) d'une machine (3, 5) dans une préparation de filage ayant une entrée de flocons de fibre (14), une mémoire (13), une sortie de flocons de fibre (15) et un châssis de machine (16), dans lequel le châssis de machine (16) est monté sur au moins quatre points de support (17, 18, 19, 20) sur une fondation (21), et un axe de déplacement (22) est défini par une ligne de raccordement provenant de l'entrée de verrou de fibre (14) à la sortie de flocons de fibre (15), selon lequel, pendant le remplissage ou le vidage du magasin (13) de la machine (3, 5), un changement résultant de poids est proportionnel à une charge sur le châssis de machine (16) et sur les points de support individuels (17, 18, 19, 20) de la machine (3, 5), **caractérisé en ce qu'**au moins deux cellules de charge (23, 24) sont prévues entre le châssis de machine (16) et la fondation (21) et un changement de charge de poids sur les cellules de charge (23, 24) pendant le remplissage ou le vidage de la mémoire (13) est mesuré et une ligne de raccordement (25) des deux cellules de charge (23, 24) sont situées transversalement à l'axe de déplacement (22).

10. Procédé selon la revendication 9, **caractérisé en ce qu'**après un étalonnage préalable avec le magasin (13) vide et/ou plein, le niveau de remplissage (32) de la mémoire (13) est calculé à partir de la modification de la charge de poids sur les au moins deux cellules de charge (23, 24).
